Europäisches Patentamt

European Patent Office

Office européen des brevets

(19)

(11) **EP 1 154 637 A1**

(12) **EUROPÄISCHE PATENTANMELDUNG**

(43) Veröffentlichungstag:
**14.11.2001 Patentblatt 2001/46**

(51) Int Cl.7: **H04N 1/54**

(21) Anmeldenummer: **00110318.3**

(22) Anmeldetag: **13.05.2000**

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(71) Anmelder: **Orell Füssli Sicherheitsdruck AG
8036 Zürich (CH)**

(72) Erfinder: **Zürcher, Bruno
8700 Küsnacht (CH)**

(74) Vertreter: **Blum, Rudolf Emil Ernst
c/o E. Blum & Co
Patentanwälte
Vorderberg 11
8044 Zürich (CH)**

(54) **Verfahren zur Farbseparation**

(57) Um ein Farbbild in mindestens drei, vorzugsweise vier Separationsfarben aufzuteilen, wird ein System zur Verfügung gestellt, bei welchem die Separationsfarben frei und ortsabhängig eingegeben werden können. Ferner kann für jede Separationsfarbe ein ortsabhängiger Grenzwert spezifiziert werden. Daraus werden entsprechende Separationswerte ermittelt. Ausserdem werden die Abweichungen des erzeugten Bildes vom Farbbild berechnet. Dies erlaubt es, Farbseparationen in beliebige Farben durchzuführen, was insbesondere im Sicherheitsdruck Anwendung findet.

EP 1 154 637 A1

**Beschreibung**

Die Erfindung betrifft ein Verfahren und ein Computerprogramm zur Farbseparation gemäss Oberbegriff der unabhängigen Ansprüche.

Verfahren bzw. Programme dieser Art dienen als Vorstufe zum Druckvorgang. Sie erlauben es, ein Farbbild in die Druckfarben, d.h. die Separationsfarben, aufzuteilen. Normalerweise wird dabei ein Farbbild im RGB-Raum in seine CMYK-Komponenten aufgeteilt um sodann mit entsprechenden Farben, d.h. Cyan, Magenta, Gelb und Schwarz, gedruckt zu werden. Bestehende Lösungen eignen sich jedoch nur bedingt für den Sicherheits- und Spezialdruck, wo andere Farbarten zum Einsatz kommen.

Es ist deshalb Aufgabe der vorliegenden Erfindung, ein Computerprogramm bzw. ein Verfahren der Eingangs genannten Art bereitzustellen, welches eine flexible Farbseparation erlaubt. Diese Aufgabe wird vom Gegenstand der unabhängigen Ansprüche gelöst.

Erfindungsgemäss ist es also möglich, mindestens eine, vorzugsweise alle der Separationsfarben variabel vorzugeben, d.h. der Benutzer kann den gewünschten Farbwert für diese Separationsfarbe(n), z.B. in Form ihrer RGB-Anteile, angeben und ist nicht an einen vorgegebenen Wert gebunden. Ausserdem gibt er ein Farbbild ein. Sodann wird berechnet, wie das Farbbild in den gewünschten Separationsfarben am besten darzustellen ist. Hierzu werden die entsprechenden Separationswerte ermittelt. Diese geben den Bedeckungsgrad bzw. die Farbmenge für die jeweilige Separationsfarbe an.

Vorzugsweise kann mindestens eine der Separationsfarben ortsabhängig angegeben werden. Dies erlaubt es, Farbseparationen für Druckprozesse zu erstellen, bei denen sich die einzelnen Separationsfarben abhängig vom Ort ändern, was insbesondere im Sicherheitsdruck Anwendung findet. Hierzu kann die Separationsfarbe z.B. für jedes Bildpixel einzeln vorgegeben werden. Beispielsweise kann die Separationsfarbe als zweidimensionale Anordnung unterschiedlicher Farbpixel vorgegeben werden.

Es ist auch möglich, für mindestens eine der Separationsfarben eine ortsabhängige Bereichsmaske vorzugeben. Eine solche Maske kann den Anteil der Separationsfarbe nach oben oder unten beschränken, was es z.B. erlaubt, die maximale Überdeckung zu limitieren oder sicherheitstechnische Effekte zu erzielen.

Vorzugsweise wird entsprechend der Farbanteile der Separationsfarben das resultierende Bild berechnet. Aus dem resultierenden Bild kann sodann die Abweichung zum Farbbild bestimmt werden, was eine Prüfung der Qualität der Farbseparation erlaubt. Insbesondere kann diese Abweichung hierzu ortsabhängig dargestellt werden, z. B. indem sie mit einem Grenzwert verglichen wird und jene Bereiche hervorgehoben werden, in denen die Abweichung grösser als der Grenzwert ist.

Zur Durchführung des Verfahrens kann ein Computerprogramm zur Verfügung gestellt werden, wobei hierunter eine in einem geeigneten Betriebssystem lauffähige vollständige Applikation oder ein Plug-in, d.h. ein Modul, für eine solche Applikation zu verstehen ist. Ein derartiges Programm muss in der Lage sein, einen benutzerdefinierten Farbwert für mindestens eine der Separationsfarben einzulesen.

Bevorzugt ist eine Ausgestaltung als Plug-in für ein Bildverarbeitungsprogramm, welches mehrere Bildebenen für zweidimensionale Pixeldaten bereitstellt. In einer derartigen Umgebung können in einfacher Weise die Ein- und Ausgabedaten bereitgestellt werden. Insbesondere kann das Farbbild in einer der Bildebenen abrufbar sein. Auch die Separationsfarben können in Bildebenen ortsabhängig abgespeichert werden. Zur Ausgabe können die Farbanteile in Ebenenmasken abgespeichert werden, wobei in den entsprechenden Bildebenen jeweils die Separationsfarben abgespeichert sind. Dies erlaubt es, in einfacher Weise Daten für den Druckprozess zu erzeugen und/oder die Anteile und Effekte der einzelnen Separationsfarben zu visualisieren.

Weitere bevorzugte Ausführungen und Anwendungen der Erfindung ergeben sich aus den abhängigen Ansprüchen und der nun folgenden Beschreibung anhand der Figuren. Dabei zeigen:

Fig. 1 eine Implementation des erfindungsgemässen Verfahrens und
Fig. 2 ein Ablaufdiagramm bei der Ausführung eines Programms.

Das Verfahren bzw. das Computerprogramm gemäss der vorliegenden Erfindung geht von einem Farbbild $C_T$ aus, welches z.B. als Anordnung von Bildpixeln in einem Farbraum gegeben ist. Normalerweise handelt es sich hierbei um einen dreidimensionalen Farbraum, wie z.B. dem RGB-Raum oder einem anderen CIE-XYZ Raum.

Gegeben sind vorzugsweise vier (eventuell auch nur drei oder mehr als vier) Separationsfarben $C_1$, $C_2$, $C_3$ und $C_4$, und gegebenenfalls eine Untergrundfarbe $C_0$. Die Separationsfarben $C_1$, $C_2$, $C_3$ und $C_4$ entsprechen den Druckfarben, in denen das vorgegebene Farbbild zu drucken ist.

Insbesondere im Sicherheitsdruck ist es möglich, dass die Separationsfarben ortsabhängig sind, d.h. dass sie für unterschiedliche Bildpixel unterschiedliche Werte besitzen.

Beim Druck werden die Separationsfarben $C_1$, $C_2$, $C_3$ und $C_4$ entsprechend ihren sog. Separationswerten $\alpha_1$, $\alpha_2$, $\alpha_3$ und $\alpha_4$ aufgetragen ("Halftoning-Verfahren"), so dass eine optisch wahrnehmbare Farbe $C(\alpha_1, \alpha_2, \alpha_3, \alpha_4)$

entsteht. Die Separationswerte beschreiben, wie stark jede Separationsfarbe einzusetzen ist.

Gesucht sind diejenigen Separationswerte $\alpha_1$, $\alpha_2$, $\alpha_3$ und $\alpha_4$, die eine möglichst realistische Darstellung des Farbbilds $C_T$ ergeben. Als "möglichst realistisch" für eine Farbe $C_T$ ist dabei diejenige Druckfarbe C zu verstehen, für welche gilt, dass z.B. $|C_T - C|^2$ (oder ein anderes, geeignetes Mass) minimal wird.

Im Appendix wird ein Verfahren beschrieben, wie für eine gegebene Farbe $C_T$ und für gegebene Separationsfarben $C_1$, $C_2$, $C_3$ und $C_4$ geeignete Separationswerte $\alpha_1$, $\alpha_2$, $\alpha_3$ und $\alpha_4$ gefunden werden können, um eine möglichst realistische Darstellung C der Farbe $C_T$ zu erhalten.

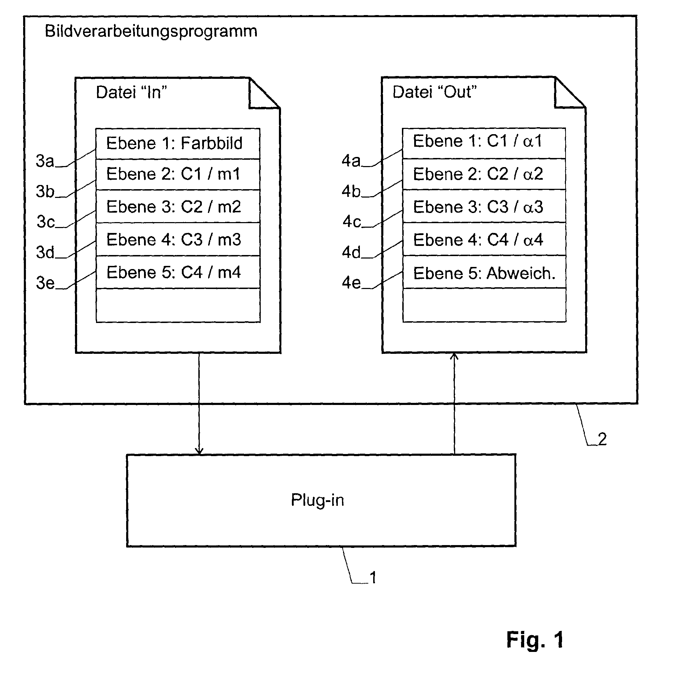

Eine konkrete Implementation des Verfahrens in Form eines Plug-ins 1 für ein Bildverarbeitungsprogramm 2 wird in Fig. 1 dargestellt. Beim Bildverarbeitungsprogramm 2 kann es sich z.B. um das Produkt "Photoshop" der Firma Adobe Systems Incorporated handeln. Derartige Bildverarbeitungsprogramme erlauben es, Erweiterungen als sog. "Plug-ins" einzubinden. Diese Techniken sind dem Fachmann bekannt.

Der Programmcode des Plug-ins 1 führt bei seinem Aufruf die Schritte durch, die im folgenden beschrieben sind.

Wird das Plug-in ausgeführt, so fragt es den Benutzer zuerst nach den Eingabeparametern. Sodann greift es auf eine Datei "In" zu, um das Farbbild und die Separationsfarben zu ermitteln. Es berechnet sodann die Separationswerte $\alpha_1$, $\alpha_2$, $\alpha_3$ und $\alpha_4$ und speichert diese in einer Datei "Out" ab.

Beide Dateien werden vom Bildverarbeitungsprogramm 2 verwaltet und dargestellt. Jede Datei enthält mehrere Bildebenen 3a - 3e bzw. 4a - 4e. Jede Bildebene speichert Pixeldaten sowie eine Ebenenmaske. Bei den Pixeldaten handelt es sich um ein zweidimensionales Array aus Farbwerten, z.B. im RGB-Format. Die Ebenenmaske ist ein zweidimensionales Array gleicher Grösse aus Maskenwerten, wobei jeder Maskenwert z.B. eine Zahl zwischen 0 und 255 ist.

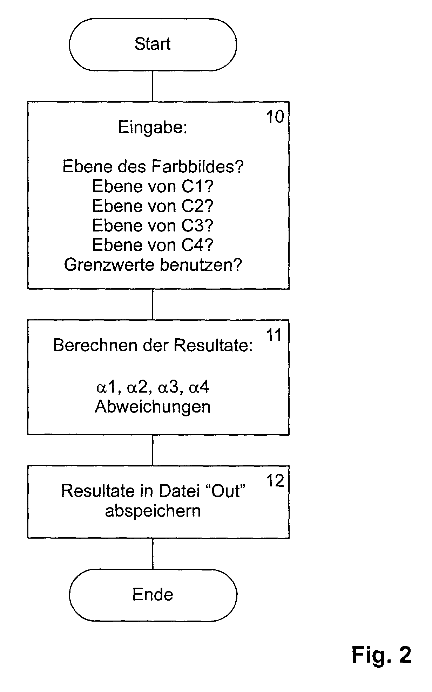

Der Ablauf beim Ausführen des Plug-ins 2 ist in Fig. 2 dargestellt:

In einem ersten Schritt 10 wird der Benutzer nach den Eingabeparametern gefragt. Hierzu gibt er vier verschiedene Bildebenen der Datei "In" an:

- Die Ebene des zu separierenden Farbbildes: In dieser Ebene ist das Farbbild gespeichert, für welches eine Farbseparation durchzuführen ist.
- Vier Ebenen für die Separationsfarben $C_1$, $C_2$, $C_3$, $C_4$: In den Pixeldaten dieser Ebenen ist die jeweilige Separationsfarbe abgelegt. Dies erlaubt es dem Benutzer, mit den Werkzeugen des Bildverarbeitungsprogramms 2 jede Separationsfarbe variabel und individuell zu definieren. Er ist nicht an vorgegebene Separationsfarben gebunden. Jede Separationsfarbe kann dabei auch ortsabhängig sein, d.h. in einem linken Teil des Bildes können z.B. andere RGB-Werte für die Separationsfarbe als in einem rechten Teil des Bildes verwendet werden. In der Ebenenmaske jeder dieser Ebenen kann zudem eine Bereichsmaske abgespeichert werden. Diese gibt für jedes Pixel der Separationsfarbe $C_i$ einen Grenzwert für den Separationswert $\alpha_i$ an, z.B. einen oberen Grenzwert.
- Verwendung der Grenzwerte: Hier kann der Benutzer angeben, ob die in den Ebenenmasken der Ebenen von $C_1$, $C_2$, $C_3$, $C_4$ abgespeicherten Grenzwerte berücksichtigt werden sollen.

In Schritt 11 werden nun die Resultate berechnet. Es sind dies die Separationswerte $\alpha_1$, $\alpha_2$, $\alpha_3$ und $\alpha_4$ und die Abweichungen $C_T - C$. Dies geschieht pixelweise. Für jedes Pixel des Farbbilds werden die Separationsfarben $C_1$, $C_2$, $C_3$, $C_4$ aus den entsprechenden Ebenen 3b - 3e abgefragt, sowie gegebenenfalls die zugehörigen Grenzwerte. Sodann werden z.B. mit dem im Appendix angegebenen Algorithmus die Separationswerte $\alpha_1$, $\alpha_2$, $\alpha_3$ und $\alpha_4$ für das entsprechende Pixel berechnet.

In Schritt 12 werden diese Resultate in der Datei "Out" abgespeichert, wobei diese nötigenfalls erstellt wird. Die Datei "Out" enthält die Ebenen 4a, 4b, 4c, 4d, deren Pixeldaten jenen der Ebenen 3b, 3c, 3d, 3e der Datei "In" entsprechen, d.h. die Separationsfarben $C_1$, $C_2$, $C_3$, $C_4$ enthalten. Die Ebenenmasken dieser Ebenen enthalten die Separationswerte $\alpha_1$, $\alpha_2$, $\alpha_3$ und $\alpha_4$. Schliesslich wird in einer Ebene 4e der Datei "Out" die Abweichung abgespeichert.

Das Resultatbild C wird rechnerisch ermittelt aus den Werten der $C_k$ und der $\alpha_k$, und zwar aus

$$C \;=\; 255 \,\cdot\, \prod_{k=1}^{4} \bigl(1 - \alpha_k \,\cdot\, (1 - C_k \,/\, 255)\bigr).$$

Die Ebene 4e der Datei "Out", welche die Abweichungen $C_T - C$ angibt, kann als Pixeldaten z.B. das Farbbild aus Ebene 3a der Datei "In" enthalten, und zwar für all jene Pixel, bei denen die Abweichung $|C_T - C|$ oberhalb eines vorgegebenen Grenzwerts liegt. Die übrigen Pixel sind weiss oder transparent. In der Ebenenmaske der Ebene 4e ist die auf 0 bis 255 skalierte Abweichung $|C_T - C|$ für das entsprechende Pixel abgespeichert.

Dies erlaubt es, die Abweichung, und insbesondere die Bereiche des Farbbildes mit grosser Abweichung, ortsabhängig darzustellen. Sie können auch über das resultierende Bild eingeblendet werden.

Die Möglichkeit, für jede Separationsfarbe einen Grenzwert anzugeben, erlaubt es, z.B. zwei Farben zu verwenden, die im sichtbaren Spektralbereich im wesentlichen identisch sind aber unterschiedliche optische Eigenschaften in anderen Spektralbereichen aufweisen, z.B. eine unterschiedliche Fluoreszenz bei UV-Bestrahlung. In einem Bereich, in welchem die erste der beiden Farben einzusetzen ist, wird der obere Grenzwert der zweiten Farbe auf 0 gesetzt und umgekehrt.

Es ist auch denkbar, mehr als vier Separationsfarben anzugeben. Auch in diesem Fall können mit den im Appendix angegebenen Methoden entsprechende Separationswerte $\alpha_k$ ermittelt werden. Andererseits können auch nur drei Separationsfarben verwendet werden, was jedoch zu Einbussen in der Bildqualität führen kann.

Im obigen Beispiel ist das erfindungsgemässe Verfahren als Plug-in für ein Bildverarbeitungsprogramm implementiert. Es ist auch möglich, das Verfahren als eigenständige Applikation mit eigenem Benutzerinterface zu realisieren, die ihre Daten direkt über das jeweilige Betriebssystem abruft bzw. abspeichert.

Appendix:

Wird ein Bild in vier Separationsfarben $C_1$, $C_2$, $C_3$, $C_4$ auf einem Untergrund mit Farbe $C_0$ mit vier Halbtonrastern gedruckt, so können insgesamt 16 unterschiedliche Farben entstehen. Es sind dies:

$C_0$: Untergrundfarbe
$C_1$: Grundfarbe 1
$C_2$: Grundfarbe 2
$C_3$: Grundfarbe 3
$C_4$: Grundfarbe 4
$C_{12}$: Kombination von $C_1$ und $C_2$
$C_{13}$: Kombination von $C_1$ und $C_3$
$C_{14}$: Kombination von $C_1$ und $C_4$
$C_{23}$: Kombination von $C_2$ und $C_3$
$C_{24}$: Kombination von $C_2$ und $C_4$
$C_{34}$: Kombination von $C_3$ und $C_4$
$C_{123}$: Kombination von $C_1$, $C_2$ und $C_3$
$C_{124}$: Kombination von $C_1$, $C_2$ und $C_4$
$C_{234}$: Kombination von $C_2$, $C_3$ und $C_4$
$C_{1234}$: Kombination von $C_1$, $C_2$, $C_3$ und $C_4$

Zur Berechnung der Separationswerte identifiziert man die oben genannten Farbkombinationen durch ihre Tristimulus-Werte in einem 3D-Farbraum (z.B. RGB oder CIE-XYZ Raum), d.h. es ist $C_* \in IR^3$.

Die Neugebauer-Gleichung modelliert nun die resultierende Farbe C als lineare Funktion der Farben C* und ihrer jeweiligen flächenmässigen Anteile a*.

$$C = a_0 C_0 + a_1 C_1 + a_2 C_2 + a_3 C_3 + a_4 C_4 + a_{12} C_{12} + a_{13} C_{13} + a_{14} C_{14} +$$

$$a_{23} C_{23} + a_{24} C_{24} + a_{34} C_{34} + a_{123} C_{123} + a_{124} C_{124} + a_{134} C_{134} +$$

$$a_{234} C_{234} + a_{1234} C_{1234}$$

Nimmt man jetzt an, dass sich die Koeffizienten a* nach dem Demichelschen Überlappungsmodell verhalten, d.h. dass sie sich als Funktion von Halbtonintensitäten bzw. Separationswerten $\alpha_1$, $\alpha_2$, $\alpha_3$ und $\alpha_4$ ausdrücken lassen (unabhängige Raster), so schreibt sich die Neugebauer-Gleichung als $C: IR^4 \to IR^3$, oder ausgeschrieben

$$C(\alpha_1, \alpha_2, \alpha_3, \alpha_4) = (1 - \alpha_1)(1 - \alpha_2)(1 - \alpha_3)(1 - \alpha_4)C_0$$

$$+ \alpha_1(1 - \alpha_2)(1 - \alpha_3)(1 - \alpha_4)C_1 + (1 - \alpha_1)\alpha_2(1 - \alpha_3)(1 - \alpha_4)C_2$$

$$+ (1 - \alpha_1)(1 - \alpha_2)\alpha_3(1 - \alpha_4)C_3 + (1 - \alpha_1)(1 - \alpha_2)(1 - \alpha_3)\alpha_4 C_4$$

$$+ \alpha_1\alpha_2(1 - \alpha_3)(1 - \alpha_4)C_{12} + \alpha_1(1 - \alpha_2)\alpha_3(1 - \alpha_4)C_{13}$$

$$+ \alpha_1(1 - \alpha_2)(1 - \alpha_3)\alpha_4 C_{14} + (1 - \alpha_1)\alpha_2\alpha_3(1 - \alpha_4)C_{23}$$

$$+ (1 - \alpha_1)\alpha_2(1 - \alpha_3)\alpha_4 C_{24} + (1 - \alpha_1)(1 - \alpha_2)\alpha_3\alpha_4 C_{34}$$

$$+ \alpha_1\alpha_2\alpha_3(1 - \alpha_4)C_{123} + \alpha_1\alpha_2(1 - \alpha_3)\alpha_4 C_{124} + \alpha_1(1 - \alpha_2)\alpha_3\alpha_4 C_{134}$$

$$+ (1 - \alpha_1)\alpha_2\alpha_3\alpha_4 C_{234} + \alpha_1\alpha_2\alpha_3\alpha_4 C_{1234}$$

Für eine gegebene Farbe $C_T$ erfolgt die Berechnung der Separationswerte $\alpha_1$, $\alpha_2$, $\alpha_3$ und $\alpha_4$ bezüglich der Separationsfarben $C_1$, $C_2$, $C_3$, $C_4$ durch Invertieren des Gleichungssystems

$$C(\alpha_1, \alpha_2, \alpha_3, \alpha_4) = C_T \qquad (1)$$

Dieses Gleichungssystem mit 3 Gleichungen und 4 Unbekannten ist unterbestimmt und es existieren im allgemeinen unendlich viele Lösungen. Zur eindeutigen Lösbarkeit wird daher eine Einschränkung

$$g(\alpha) = \|\alpha - p\|^2 \; minimal \qquad (2)$$

eingeführt, wobei $\alpha = (\alpha_1, \alpha_2, \alpha_3, \alpha_4)$ und $p \in IR^4$ beliebig wählbar ist, z.B. $p = 0$.

Das Problem lässt sich jetzt als Extremalwertaufgabe (2) mit Nebenbedingungen (1) betrachten. Die entsprechende Lagrangesche Prinzipalfunktion $\Phi: IR^7 \rightarrow IR$ lautet

$$\Phi(\alpha, \lambda) = g(\alpha) + \langle \lambda, C(\alpha) - C_T \rangle \, ,$$

wobei $\lambda \in IR^3$ und $\langle \cdot, \cdot \rangle$ das Skalarprodukt in $IR^3$ bezeichnet. Der dazugehörige Satz von Lagrange besagt, dass die Lösungen des Gleichungssystems

$$\nabla\Phi(\alpha, \lambda) = 0 \qquad (3)$$

zusammenfallen mit der Lösung des Systems (1) und (2). Hierbei bezeichnet $\nabla$ den Gradienten bezüglich $\alpha$ und $\lambda$. Das Gleichungssystem (3) besteht aus 7 Unbekannten und 7 Gleichungen und kann mit Standardverfahren, wie sie aus der Numerik bekannt sind, gelöst werden.

Falls die Gleichung (1) nicht Lösbar ist, so wird die Abweichung $|C(\alpha_1, \alpha_2, \alpha_3, \alpha_4) - C_T|$ minimiert.

Dieser Formalismus lässt sich auch auf Berechnungen mit mehr als vier Separationsfarben verallgemeinern. Um eindeutige Lösungen zu erhalten, können nötigenfalls weitere Nebenbedingungen der Art von Formel (2) vorgesehen werden.

Der obige Formalismus besteht auf der Annahme, dass die Druckraster für die einzelnen Separationsfarben unabhängig sind. Sind die Raster voneinander nicht unabhängig, so ist die Berechnung von $C(\alpha_1, \alpha_2, \alpha_3, \alpha_4)$ entsprechend anzupassen. Generell eignet sich das vorliegende Verfahren zur Verwendung mit beliebigen Rastern, auch nicht-standard Rastern.

Referenzen:

[1] H.E.J. Neugebauer, "Die theoretischen Grundlagen des Mehrfarbendruckes", *Zeitschrift für wissenschaftliche Photographie, Photophysik und Photochemie* 36, p.73-89 (1937).
[2] E. Demichel, *Procede* 26, p. 17-21, p. 26-27 (1924).
[3] H.R. Kang, "Color Technology for Electronic Imaging Devices", *SPIE Optical Engineering Press* (1997).
[4] K.J. Heuberger, Z.M. Jing, "Farbtransformation von RGB zu CMY", *UGRA Bericht 105/1,* St. Gallen 1991.

[5]H. Heuser, "Lehrbuch der Analysis", *B.G. Teubner Stuttgart.*

[6] W.H. Press, B.P. Flannery, S.A. Teukolsky, W.T. Vetterling, "Numerical Recipes", *Cambridge University Press* (1992).

**Patentansprüche**

1. Verfahren zur Farbseparation eines Farbbildes in mindestens drei, vorzugsweise vier, Separationsfarben ($C_1$, $C_2$, $C_3$, $C_4$) mit den Schritten

   Eingabe des Farbbildes ($C_T$), und
   Berechnen von Separationswerten ($\alpha_1$, $\alpha_2$, $\alpha_3$, $\alpha_4$) der Separationsfarben derart, dass die entsprechend den Separationswerten gedruckten Separationsfarben im wesentlichen das Farbbild ergeben,

   **gekennzeichnet durch** den Schritt einer variablen Eingabe mindestens einer der Separationsfarben.

2. Verfahren nach Anspruch 1, wobei alle Separationsfarben ($C_1$, $C_2$, $C_3$, $C_4$) beliebig eingegeben werden.

3. Verfahren nach einem der vorangehenden Ansprüche, **dadurch gekennzeichnet, dass** mindestens eine der Separationsfarben ($C_1$, $C_2$, $C_3$, $C_4$) ortsabhängig ist und die Separationswerte ($\alpha_1$, $\alpha_2$, $\alpha_3$, $\alpha_4$) ortsabhängig berechnet werden.

4. Verfahren nach Anspruch 3, **dadurch gekennzeichnet, dass** das Farbbild ($C_T$) aus einer zweidimensionalen Anordnung von Bildpixeln besteht, und dass mindestens eine der Separationsfarben ($C_1$, $C_2$, $C_3$, $C_4$), vorzugsweise alle Separationsfarben, ortsabhängig für jedes Bildpixel individuell vorgegeben wird bzw. werden.

5. Verfahren nach einem der Ansprüche 3 oder 4, **dadurch gekennzeichnet, dass** mindestens eine der Separationsfarben ($C_1$, $C_2$, $C_3$, $C_4$), vorzugsweise alle Separationsfarben, als zweidimensionale Anordnung aus Separationsfarbenpixeln eingebbar vorgegeben wird bzw. werden.

6. Verfahren nach einem der vorangehenden Ansprüche, **dadurch gekennzeichnet, dass** für mindestens eine der Separationsfarben ($C_1$, $C_2$, $C_3$, $C_4$) eine ortsabhängige Bereichsmaske vorgegeben wird, welche den Separationswert ($\alpha_1$, $\alpha_2$, $\alpha_3$, $\alpha_4$) der Separationsfarbe nach oben und/oder unten limitiert.

7. Verfahren nach Anspruch 6, **dadurch gekennzeichnet, dass** zwei der Separationsfarben ($C_1$, $C_2$, $C_3$, $C_4$) im sichtbaren Spektralbereich gleich sind aber unterschiedliche optische Eigenschaften in anderen Spektralbereichen aufweisen, und dass über die ortsabhängige Bereichsmaske in unterschiedlichen Bereichen je eine der im sichtbaren Spektralbereich gleichen Separationsfarben unterdrückt wird.

8. Verfahren nach einem der vorangehenden Ansprüche, **dadurch gekennzeichnet, dass** entsprechend der Separationswerte ($\alpha_1$, $\alpha_2$, $\alpha_3$, $\alpha_4$) ein resultierendes Bild und eine Abweichung des resultierenden Bildes vom Farbbild berechnet werden.

9. Verfahren nach Anspruch 8, **dadurch gekennzeichnet, dass** die Abweichung ortsabhängig dargestellt wird, und insbesondere dass die Abweichung mit einem Grenzwert verglichen wird und Bereiche, in denen die Abweichung grösser als der Grenzwert ist, dargestellt werden.

10. Computerprogramm mit Programmcode zur Ausführung der Schritte des Verfahrens nach einem der vorangehenden Ansprüche, wenn das Programm auf einem Computer ausgeführt wird.

11. Computerprogramm nach Anspruch 10, **dadurch gekennzeichnet, dass** es ausgestaltet ist, um mindestens eine benutzerdefinierte Separationsfarbe zu verwenden, und insbesondere dass es ausgestaltet ist, die benutzerdefinierte Separationsfarbe als zweidimensionale Anordnung aus Separationsfarbenpixeln einzulesen.

12. Computerprogramm nach einem der Ansprüche 10 oder 11, **dadurch gekennzeichnet, dass** es als Plug-in (1) für ein Bildverarbeitungsprogramm (2) ausgestaltet ist, welches mehrere Bildebenen (3a - 3e, 4a - 4e) für zweidimensionale Pixeldaten bereitstellt, wobei mit dem Plug-in aus einer ersten Bildebene (3a) das Farbbild ($C_T$) auslesbar ist.

**13.** Computerprogramm nach Anspruch 12, **dadurch gekennzeichnet, dass** es ausgestaltet ist, um mindestens eine der Separationsfarben ($C_1$, $C_2$, $C_3$, $C_4$) ortsabhängig aus einer zweiten der Bildebenen (3b, 3c, 3d, 3e) auszulesen, und insbesondere dass es ausgestaltet ist, um alle Separationsfarben ortsabhängig aus verschiedenen Bildebenen auszulesen.

**14.** Computerprogramm nach einem der Ansprüche 12 oder 13, **dadurch gekennzeichnet, dass** jeder Bildebene eine ortsabhängige Ebenenmaske zugeordnet ist, und dass das Programm ausgestaltet ist, um die Separationswerte ($\alpha_1$, $\alpha_2$, $\alpha_3$, $\alpha_4$) in Ebenenmasken abzuspeichern, wobei in den entsprechenden Bildebenen die Separationsfarben abgespeichert sind.

Bildverarbeitungsprogramm

Datei "In"

| | |
|---|---|
| 3a | Ebene 1: Farbbild |
| 3b | Ebene 2: C1 / m1 |
| 3c | Ebene 3: C2 / m2 |
| 3d | Ebene 4: C3 / m3 |
| 3e | Ebene 5: C4 / m4 |

Datei "Out"

| | |
|---|---|
| 4a | Ebene 1: C1 / α1 |
| 4b | Ebene 2: C2 / α2 |
| 4c | Ebene 3: C3 / α3 |
| 4d | Ebene 4: C4 / α4 |
| 4e | Ebene 5: Abweich. |

2

Plug-in

1

**Fig. 1**

**Fig. 2**

**Europäisches Patentamt**

## EUROPÄISCHER RECHERCHENBERICHT

Nummer der Anmeldung

EP 00 11 0318

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | EP 0 763 926 A (DAINIPPON SCREEN MFG) 19. März 1997 (1997-03-19) * Zusammenfassung; Ansprüche; Abbildungen * --- | 1,10 | H04N1/54 |
| A | GABRIEL MARCU ET AL: "COLOR SEPARATION FOR PRINTING WITH NON-STANDARD INKS" PROCEEDINGS OF THE INTERNATIONAL CONFERENCE ON IMAGE PROCESSING (ICIP),US,LOS ALAMITOS, IEEE COMP. SOC. PRESS, Bd. CONF. 1, 13. November 1994 (1994-11-13), Seiten 1002-1005, XP000522946 ISBN: 0-8186-6952-7 * das ganze Dokument * --- | 1,10 | |
| A | EP 0 622 952 A (BARCO GRAPHICS NV) 2. November 1994 (1994-11-02) * Zusammenfassung; Ansprüche; Abbildungen * ----- | 1,10 | **RECHERCHIERTE SACHGEBIETE (Int.Cl.7)** H04N |

Der vorliegende Recherchenbericht wurde für alle Patentansprüche erstellt

| Recherchenort | Abschlußdatum der Recherche | Prüfer |
|---|---|---|
| DEN HAAG | 6. Oktober 2000 | Isa, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**  EP 00 11 0318

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-10-2000

| Im Recherchenbericht angeführtes Patentdokument | Datum der Veröffentlichung | Mitglied(er) der Patentfamilie | Datum der Veröffentlichung |
|---|---|---|---|
| EP 0763926 A | 19-03-1997 | JP 9080742 A | 28-03-1997 |
| | | JP 9234849 A | 09-09-1997 |
| | | JP 9234850 A | 09-09-1997 |
| | | JP 9248894 A | 22-09-1997 |
| | | US 5936749 A | 10-08-1999 |
| EP 0622952 A | 02-11-1994 | BE 1006960 A | 31-01-1995 |
| | | US 5689349 A | 18-11-1997 |

EPO FORM P0461

Für nähere Einzelheiten zu diesem Anhang : siehe Amtsblatt des Europäischen Patentamts, Nr.12/82